# EUROPÄISCHE PATENTSCHRIFT

(11) **EP 3 690 408 B1**
(45) Veröffentlichungstag und Bekanntmachung des Hinweises auf die Patenterteilung: **16.03.2022**
(21) Anmeldenummer: 20153997.0
(22) Anmeldetag: 28.01.2020
(51) Int. Cl.: G01G 19/12

(54) **MESSVORRICHTUNG ZU EINER FAHRZEUGEIGENEN GEWICHTSMESSUNG EINES FAHRZEUGS UND FAHRZEUG MIT EINER SOLCHEN MESSVORRICHTUNG**
MEASURING DEVICE FOR A VEHICLE-SPECIFIC WEIGHT MEASUREMENT OF A VEHICLE AND VEHICLE WITH SUCH A MEASURING DEVICE
DISPOSITIF DE MESURE DESTINÉ À LA MESURE À BORD DU POIDS D'UN VÉHICULE ET VÉHICULE DOTÉ D'UN TEL DISPOSITIF DE MESURE

(30) Priorität: 31.01.2019 DE 102019201276; 28.02.2019 DE 102019202763
(43) Veröffentlichungstag der Anmeldung: 05.08.2020
(73) Patentinhaber: Continental Automotive GmbH, 30165 Hannover (DE)
(72) Erfinder: Goldschmidt, Florian, 65824 Schwalbach a. Ts. (DE); Roth, Jan, 65824 Schwalbach a. Ts. (DE)
(74) Vertreter: Continental Corporation

(56) Entgegenhaltungen:
- DE-A1- 4 319 080
- JP-U- S6 335 661
- US-A1- 2017 205 273

## Beschreibung

Die Erfindung bezieht sich auf eine Messvorrichtung zu einer fahrzeugeigenen Gewichtsmessung eines Fahrzeugs mit einer ein erstes Laschenende zu einem Verbinden mit einem Aufbauelement des Fahrzeugs und ein zweites Laschenende zu einem Verbinden mit einem Blattfederelement einer Blattfeder des Fahrzeugs aufweisenden Federlasche. Darüber hinaus bezieht sich die Erfindung auf ein Fahrzeug mit einer solchen Messvorrichtung.

Eine fahrzeugeigene Gewichtsmessung eines Fahrzeugs ist an sich bekannt und kann beispielsweise mit Hilfe einer Achslastmessung des Fahrzeugs erfolgen. Zum Beispiel ist ein eine Achslastmessung aufweisendes Nutzfahrzeug mit einer eingangs genannten Messvorrichtung bekannt, wobei eine Fahrzeugachse des Nutzfahrzeugs mittels einer Blattfeder mit einem Fahrzeugaufbau des Nutzfahrzeugs verbunden ist. Die Blattfeder weist an einem Federblatt ein Messelement, zum Beispiel ein Winkelmesselement, auf, mittels dessen eine Belastung der Blattfeder erfasst wird. Die Belastung der Blattfeder ist ein Maß für das auf der Fahrzeugachse lastende Gewicht. Das Messelement kann zum Beispiel ein Dehnungsmessstreifen sein.

Außerdem bekannt ist ein Fahrzeug mit einer Fahrzeugachse, wobei die Fahrzeugachse mit einem Messelement, beispielsweise einem Dehnungsmessstreifen, versehen ist. Mittels des Messelements kann eine Verformung der Fahrzeugachse erfasst und aus der Verformung der Fahrzeugachse eine Gewichtsbelastung der Fahrzeugachse ermittelt werden. Die Fahrzeugachse ist als starres Bauteil in der Regel nur eingeschränkt geeignet, um das Fahrzeuggewicht zu messen. Die Krafteinleitungspunkte an der Fahrzeugachse können erheblich variieren.

Bei den aus dem Stand der Technik bekannten Fahrzeugen ist es aufwendig, eine reproduzierbare Positionierung des Messelements sicherzustellen.

Aus JP S63 35661 U ist eine Lasterfassungsvorrichtung für ein Fahrzeug bekannt, wobei ein Dehnungsmessstreifen an einer Seitenfläche eines eine Blattfeder, die eine Achse stützt, und eine Fahrzeugkarosserie verbindenden Bügels angebracht ist, um eine Fahrzeuglast zu erfassen.

Aus DE 43 19 080 A1 ist eine Ladegewichtsmessvorrichtung für ein Fahrzeug bekannt, wobei ein Achsgehäuse an einer Blattfeder angebracht ist. Ein Ende der Blattfeder ist über eine Lasche mit Hilfe eines an einem Karosserierahmen angebrachten Trägers abgestützt. An der Lasche ist ein Sensorelement der Dehnungsmessbauart angebracht.

Ausgehend von dem bekannten Stand der Technik liegt der Erfindung die Aufgabe zugrunde, eine Messvorrichtung der eingangs genannten Art zu schaffen, die einen einfachen Aufbau aufweist und eine zuverlässige Gewichtsmessung des Fahrzeugs ermöglicht. Zudem ist es Aufgabe der Erfindung, ein Fahrzeug mit einer solchen Messvorrichtung zu schaffen.

Die erstgenannte Aufgabe wird erfindungsgemäß jeweils gelöst mit einer die Merkmale des Anspruchs 1 oder des Anspruchs 4 aufweisenden Messvorrichtung.

In den Unteransprüchen angegeben sind vorteilhafte Weiterbildungen der Erfindung.

Von besonderem Vorteil bei der Erfindung ist, dass mittels des Sensorelements eine Deformation der Federlasche gemessen werden kann. Die Federlasche verbindet die Blattfeder mit dem Aufbauelement, zum Beispiel ein Rahmenelement, des Fahrzeugs und erweist sich als zur Gewichtsmessung des Fahrzeugs besonders geeignet, da sie definierte Krafteinleitungspunkte aufweist. Eine Deformation der Federlasche stellt ein Maß für das auf der Blattfeder lastende Gewicht dar. In einfacher und zuverlässiger Weise kann somit das Fahrzeuggewicht in Abhängigkeit einer mittels des Sensorelements gemessenen Deformation der Federlasche ermittelt werden. Die Erfindung ermöglicht vorteilhaft eine Beladungsmessung im Stand des Fahrzeugs. Eine Gewichtsmessung der Beladung wird zurückgeführt auf eine Messung des Gesamtgewichts des Fahrzeugs. Hierzu wird die Deformation der Federlasche, welche die Blattfeder mit dem Aufbauelement, beispielsweise einem Leiterrahmen des Fahrzeugs, verbindet, gemessen. Die Federlasche eignet sich besonders zur Last- und damit auch Gewichtsmessung, da an der Federlasche die Krafteinleitungspunkte klar definiert sind.

Durch die Messung direkt an der Federlasche kann ein, insbesondere proportionaler, Zusammenhang zwischen der Deformation der Federlasche und einer Achslast einer mittels der Blattfeder gefederten Fahrzeugachse des Fahrzeugs hergestellt werden. Aus einer Summe der Achslasten aller Fahrzeugachsen des Fahrzeugs kann ein Gesamtgewicht des Fahrzeugs ermittelt werden.

Im Stand der Technik kann das Sensorelement beispielsweise direkt auf der Federlasche, zum Beispiel in Form eines oder mehrerer Dehnungsmessstreifen, angebracht sein. Es kann aber auch von Vorteil sein, wenn das Sensorelement nachträglich an der Federlasche anbringbar ist. Dazu kann das Sensorelement beispielsweise als, insbesondere vorkalibrierter, Sensor zum Beispiel mit einem Sensorgehäuse oder mit Sensorelementteilen zur Befestigung an der Federlasche ausgebildet sein.

Das Blattfederelement, mit dem das zweite Laschenende der Federlasche verbunden werden kann, ist vorzugsweise ein Federauge der Blattfeder. Die Blattfeder ist insbesondere dazu vorgesehen, das Aufbauelement des Fahrzeugs gegenüber einer Fahrzeugachse abzufedern. Das Fahrzeug, zu dessen fahrzeugeigener Gewichtsmessung die Messvorrichtung vorgesehen ist, ist vorzugsweise ein Kraftfahrzeug, insbesondere ein Nutzfahrzeug, zum Beispiel ein Lastkraftwagen. Das Fahrzeug kann aber auch ein Kraftfahrzeuganhänger, beispielsweise ein ein- oder mehrachsiger Fahrzeuganhänger oder ein Sattelauflieger, sein.

Besonders vorteilhaft ist, dass die erfindungsgemäße Messvorrichtung an ein Fahrzeug mit Blattfederung nachträglich angebaut werden kann. Eine solche nachträgliche Montage kann in einfacher Weise und mit gängigen Werkstattwerkzeugen erfolgen. Der am Fahrzeug vorhandene Bauraum wird durch die Messvorrichtung nur in sehr geringem Maß beeinflusst.

Man könnte sich zum Beispiel vorstellen, dass die Federlasche als ebene Platte mit zumindest zwei parallelen Seitenkanten ausgebildet ist. Für eine erhöhte Messgenauigkeit der Messvorrichtung ist es hingegen von Vorteil, wenn einer Weiterbildung der Erfindung entsprechend die Federlasche zwischen dem ersten Laschenende und dem zweiten Laschenende eine Verjüngung aufweist und wenn das Sensorelement im Bereich der Verjüngung angeordnet ist. Die Verjüngung kann zum Beispiel auch in Form einer Einschnürung der Federlasche ausgebildet sein.

Gemäß einer anderen vorteilhaften Weiterbildung der Erfindung weist das Sensorelement einen Sensorkörper mit einem Befestigungsflansch auf, und der Befestigungsflansch ist form- und/oder kraftschlüssig mit der Federlasche verbunden. Mit einer solchen Weiterbildung ist beispielsweise eine Möglichkeit geschaffen, das Sensorelement nachträglich an der Federlasche anzuordnen.

Für eine besonders einfache und sichere Verbindung von Sensorelement und Federlasche ist gemäß einer vorteilhaften Weiterbildung der Erfindung der Befestigungsflansch mittels Klebens oder Schweißens oder Schraubens oder Nietens mit der Federlasche verbunden.

Gemäß einer ersten, mit Anspruch 1 angegebenen erfindungsgemäßen Lösung weist das Sensorelement einen Sensorkörper mit die Federlasche zwischen sich aufnehmenden Klemmlaschen auf, und der Sensorkörper ist mittels Klemmens mit der Federlasche verbunden. Auf diese Weise ist auch nachträglich eine besonders einfache Verbindung von Sensorkörper und Federlasche ermöglicht. Vorzugsweise weist der Sensorkörper zwei Klemmlaschen auf, welche die Federlasche zwischen sich aufnehmen. Zwischen den Klemmlaschen kann die Federlasche beispielsweise aufgrund von Eigenspannung der Klemmlaschen eingespannt und so der Sensorkörper auf die Federlasche aufgeklemmt sein. Es ist auch denkbar, dass zumindest eine der Klemmlaschen ergänzend oder alternativ mit einer Schraube versehen ist, mittels welcher eine Spannung erzeugt wird, welche den Sensorkörper geklemmt an der Federlasche hält.

Das Sensorelement kann grundsätzlich beliebig ausgebildet sein. Es ist zum Beispiel denkbar, dass das Sensorelement als Messelement ein Winkelmesselement oder ein Beschleunigungsmesselement aufweist. Gemäß einer vorteilhaften Weiterbildung der Erfindung kann ein besonders einfacher, zuverlässiger und kostengünstiger Aufbau der Messvorrichtung erreicht werden, wenn das Sensorelement zumindest einen Dehnungsmesstreifen als Messelement aufweist. Der zumindest eine Dehnungsmessstreifen kann vorzugsweise unmittelbar auf der Federlasche angebracht sein. Es ist, je nach Ausgestaltung des Sensorelements, aber auch vorteilhaft denkbar, dass der zumindest eine Dehnungsmessstreifen auf einem Sensorelementteil, beispielsweise einem Träger oder einem Verbindungsbolzen, oder allgemein auf einem Sensorkörper des Sensorelements angebracht ist.

Man könnte sich beispielsweise vorstellen, dass die Federlasche in das Aufbauelement des Fahrzeugs und/oder die Blattfeder eingehakt ist. Um eine besonders zuverlässige Verbindung von Federlasche und Aufbauelement einerseits sowie Blattfeder andererseits zu ermöglichen, ist es hingegen von Vorteil, wenn gemäß einer anderen Weiterbildung der Erfindung (bezüglich Anspruch 4: dass gemäß der Erfindung) das erste Laschenende ein erstes Laschenauge und das zweite Laschenende ein zweites Laschenauge umfasst.

Gemäß einer vorteilhaften Weiterbildung der Erfindung (bezüglich Anspruch 4: Gemäß der Erfindung) weist das erste Laschenauge einen ersten Bolzen zu einem Verbinden der Federlasche mit dem Aufbauelement und das zweite Laschenauge einen zweiten Bolzen zu einem Verbinden der Federlasche mit der Blattfeder auf. Damit kann die Federlasche zuverlässig mit dem Aufbauelement und der Blattfeder verbunden werden, und es ist weiter vorteilhaft ermöglicht, die Federlaschen nachträglich - zum Beispiel zur

Wartung des Sensorelements - auszutauschen. Die Bolzen können beispielsweise jeweils als Bolzenschraube ausgebildet sein.

Einer zweiten, mit Anspruch 4 angegebenen erfindungsgemäßen Lösung entsprechend weist das Sensorelement ein erstes Sensorelementteil und ein zweites Sensorelementteil auf, wobei zwischen dem ersten Sensorelementteil und dem zweiten Sensorelementteil ein Messelement angeordnet ist. Auf diese Weise kann zum Beispiel eine Wartung oder Instandsetzung des Sensorelements vereinfacht werden. Das Messelement kann beispielsweise ein Dehnungsmessstreifen sein oder einen

Dehnungsmessstreifen aufweisen. Ferner kann das Messelement beispielsweise an dem ersten Sensorelementteil oder zum Beispiel an dem zweiten Sensorelementteil angebracht sein.

Gemäß der Erfindung nach Anspruch 4 ist das erste Sensorelementteil mittels des ersten Bolzens und das zweite Sensorelementteil mittels des zweiten Bolzens mit der Federlasche verbunden. Auf diese Weise kann ein besonders einfacher Aufbau der Federlasche erreicht werden. Außerdem ist es bei einer derartigen Ausgestaltung möglich, dass Sensorelement ohne größeren Aufwand zum Beispiel auszutauschen oder zu montieren.

Die oben zweitgenannte Aufgabe wird gelöst mit einem Fahrzeug mit einem Aufbauelement und mit einer an einer Fahrzeugachse des Fahrzeugs angeordneten Blattfeder, wobei das Aufbauelement und die Blattfeder mittels einer Messvorrichtung nach einer vorgenannten Art verbunden sind.

Zu der Erfindung gehören auch Weiterbildungen des erfindungsgemäßen Fahrzeugs, die Merkmale aufweisen, wie sie bereits im Zusammenhang mit Weiterbildungen der erfindungsgemäßen Messvorrichtung beschrieben sind.

Die Erfindung umfasst auch die Kombinationen der Merkmale der beschriebenen Ausführungsformen.

Ausführungsbeispiele der Erfindung sind in den Zeichnungen 8-11 dargestellt und werden im Folgenden näher beschrieben. Es zeigen in schematisierter und skizzenhafter Darstellung:
- Fig. 1: eine Anordnung mit einer Fahrzeugachse und mit einer Messvorrichtung in einer Seitenansicht,
- Fig. 2: eine Schnittansicht eines Teilbereichs der Anordnung nach Fig. 1,
- Fig. 3A, 3B, 3C: drei verschieden ausgebildete Federlaschen in perspektivischer Darstellung,
- Fig. 4: eine Federlasche und ein Sensorelement in vereinfachter Explosionsdarstellung,
- Fig. 5: eine andere Federlasche mit einem Sensorelement in perspektivischer Darstellung,
- Fig. 6: eine weitere Federlasche mit einem Sensorelement in vereinfachter Explosionsdarstellung,
- Fig. 7: die Federlasche und das Sensorelement nach Fig. 6 in perspektivischer Darstellung,
- Fig. 8: eine weitere Federlasche mit einem Sensorelement in vereinfachter Explosionsdarstellung,
- Fig. 9: die Federlasche und das Sensorelement nach Fig. 8 in perspektivischer Darstellung,
- Fig. 10: ein Sensorelement mit einem ersten Sensorelementteil und mit einem zweiten Sensorelementteil in perspektivischer Darstellung und
- Fig. 11: eine Federlasche mit einem Sensorelement nach Fig. 10.

Sich jeweils entsprechende Elemente sind in allen Figuren mit gleichen Bezugszeichen versehen.

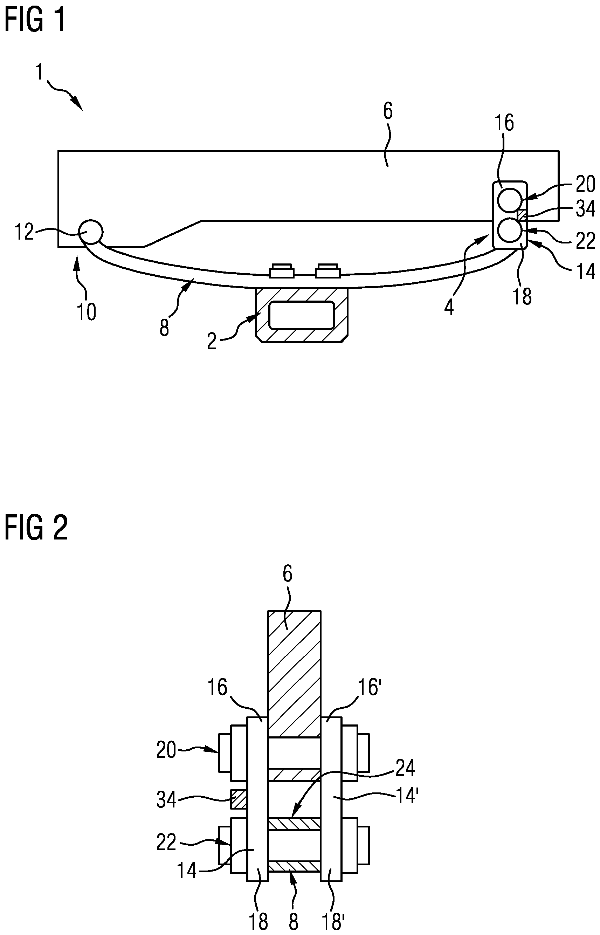

Fig. 1 zeigt eine Anordnung 1 mit einer Fahrzeugachse 2 und mit einer Messvorrichtung 4. Die Anordnung 1 ist Bestandteil eines hier nicht weiter dargestellten Fahrzeugs, beispielsweise eines Nutzfahrzeugs oder eines Anhängers für ein Nutzfahrzeug. Die Anordnung 1 weist ein Aufbauelement 6 des Fahrzeugs und eine an der Fahrzeugachse 2 angeordnete Blattfeder 8 auf. Die Blattfeder 8 ist an ihrem einen Ende mittels eines Federauges 10 und eines Federbolzens 12 mit dem Aufbauelement 6 verbunden, an ihrem anderen Ende ist die Blattfeder 8 mittels der Messvorrichtung 4 mit dem Aufbauelement 6 verbunden. Die Messvorrichtung 4 weist eine Federlasche 14 mit einem ersten Laschenende 16 und einem zweiten Laschenende 18 auf. An dem ersten Laschenende 16 ist die Messvorrichtung 4 mit dem Aufbauelement 6 verbunden, und an dem zweiten Laschenende 18 ist die Messvorrichtung 4 mit der Blattfeder 8 verbunden. Zwischen dem ersten Laschenende 16 und dem zweiten Laschenende 18 ist an der Federlasche 14 ein Sensorelement 34 zu einer Messung einer Deformation der Federlasche 14 angeordnet.

Aus Fig. 2, die eine Schnittansicht der Messvorrichtung 4 nach Figur 1 zeigt, wird deutlich, dass die Messvorrichtung 4 zwei parallel zueinander angeordnete Federlaschen 14, 14' aufweist. An einem jeweiligen ersten Laschenende 16, 16' sind die Federlaschen 14, 14' mittels eines ersten Bolzens 20 mit dem Aufbauelement 6 verbunden. An einem jeweiligen zweiten Laschenende 18, 18' sind die Federlaschen 14, 14' mittels eines ein Federauge 24 der Blattfeder 8 durchgreifenden zweiten Bolzens 22 mit der Blattfeder 8 verbunden.

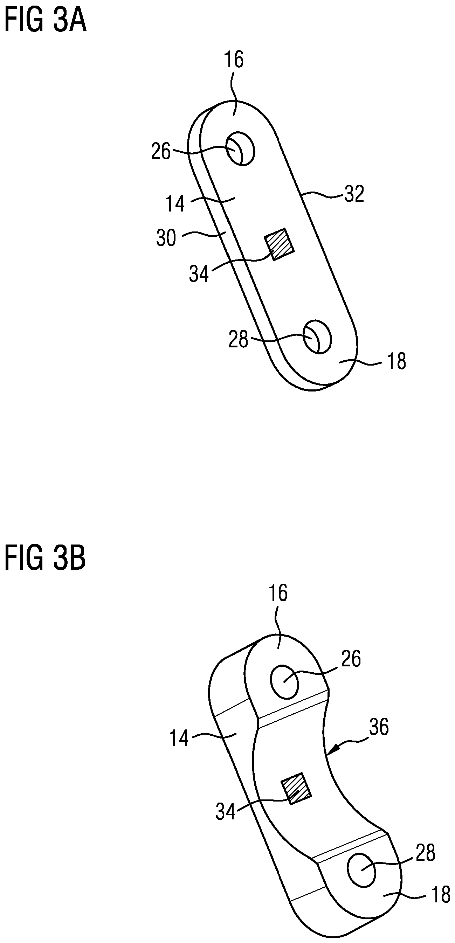

Fig. 3A zeigt ein nichterfindungsgemäßes Beispiel einer Federlasche 14 mit einem ersten Laschenende 16 und einem zweiten Laschenende 18, wobei das erste Laschenende 16 ein erstes Laschenauge 26 und das zweite Laschenende 18 ein zweites Laschenauge 28 umfasst. Die Federlasche 14 ist eben ausgebildet und weist zwei parallele Seitenkanten 30, 32 auf. Zu einer Messung einer Deformation des Federlasche 14 weist diese ein zwischen dem ersten Laschenende 16 und dem zweiten Laschenende 18 angeordnetes Sensorelement 34 auf.

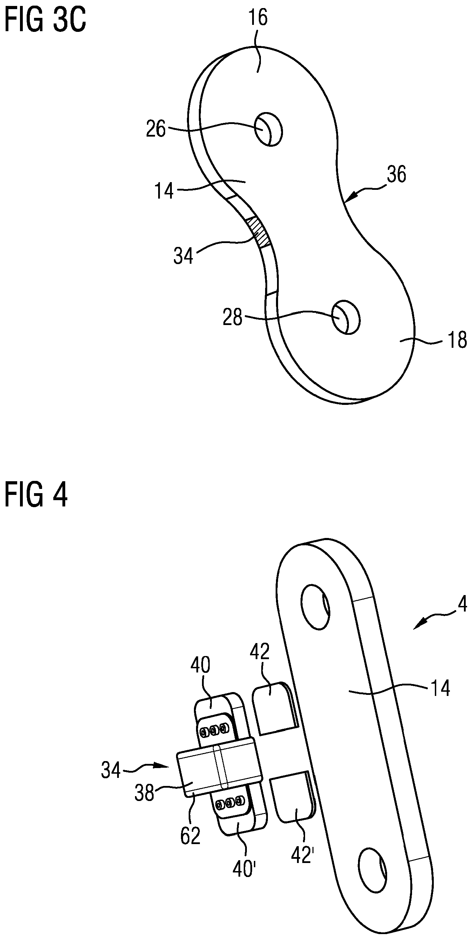

Sowohl Fig. 3B als auch Fig. 3C zeigen jeweils eine Federlasche 14, wobei die Federlasche 14 jeweils zwischen einem ersten Laschenende 16 und einem zweiten Laschenende 18 eine Verjüngung 36 aufweist. Im Bereich der jeweiligen Verjüngung 36 ist jeweils ein Sensorelement 34 angeordnet. Bei dem nichterfindungsgemäßen Beispiel nach Fig. 3B ist die Verjüngung 36 in einer Richtung parallel zu einer Erstreckungsrichtung eines ersten Laschenauges 26 des ersten Laschenendes 16 sowie eines zweiten Laschenauges 28 des zweiten Laschenendes 18 ausgebildet. In dem nichterfindungsgemäßen Beispiel nach Fig. 3C ist die Verjüngung 36 hingegen senkrecht zu einer Verbindungsgeraden zwischen einem ersten Laschenauge 26 des ersten Laschenendes 16 und einem zweiten Laschenauge 28 des zweiten Laschenendes 18 und senkrecht zu den Erstreckungsrichtungen der beiden Laschenaugen 26, 28 ausgebildet. Die Verjüngung 36 bildet hier eine Einschnürung der Federlasche 14.

Bei den nichterfindungsgemäßen Beispielen nach Fig. 3A, 3B, 3C ist das Sensorelement 34 jeweils als direkt auf der Federlasche 14 angebrachter Dehnungsmessstreifen ausgebildet.

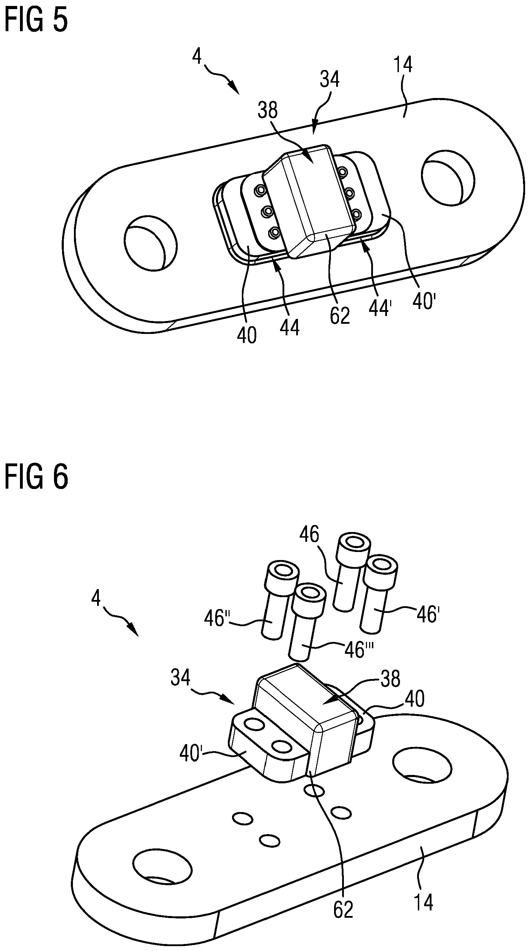

In den Fig. 4 bis 7 sind jeweils nichterfindungsgemäße Varianten einer Messvorrichtung 4 dargestellt, bei denen ein Sensorelement 34 einen Sensorkörper 38 mit einem Befestigungsflansch 40 aufweist, wobei der Befestigungsflansch 40 form- und/oder kraftschlüssig mit einer Federlasche 14 verbunden ist. Bei dem nichterfindungsgemäßen Beispiel nach Fig. 4 weist der Sensorkörper 38 zwei Befestigungsflansche 40, 40' auf, die mittels Klebens mit der Federlasche 14 verbunden werden. Dazu sind zwei mit den Befestigungsflanschen 40, 40' korrespondierende Klebefugen 42, 42' vorgesehen. Bei dem Ausführungsbeispiel nach Fig. 5 weist der Sensorkörper 38 zwei Befestigungsflansche 40, 40' auf, die mittels Schweißens mit der Federlasche 14 verbunden sind. Hierzu ist jeder der Befestigungsflansche 40, 40' mit jeweils einer Schweißnaht 44, 44' mit der Federlasche 14 verschweißt.

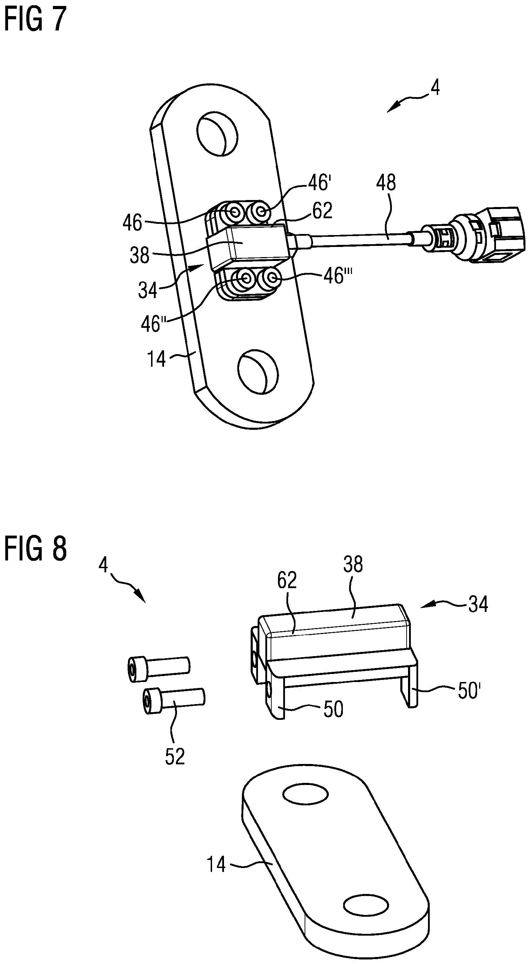

Fig. 6, 7 zeigen ein nichterfindungsgemäßes Beispiel, bei welchem Befestigungsflansche 40, 40' eines Sensorköpers 38 mittels Schraubens mit der Federlasche 14 verbunden sind.

Dazu sind für die Befestigungsflansche 40, 40' jeweils zwei Schrauben 46, 46', 46", 46‴ vorgesehen, welche in die Federlasche 14 eingeschraubt werden. Wie aus Fig. 7 ersichtlich, ist der Sensorkörper 38 mittels eines Anschlusskabels 48 beispielsweise mit einer Bordelektronik des Fahrzeugs verbindbar. Anstelle der

Schrauben 46, 46', 46", 46‴ könnten auch hier nicht dargestellte Niete zum Verbinden der Befestigungsflansche 40, 40' mit der Federlasche 14 vorgesehen sein.

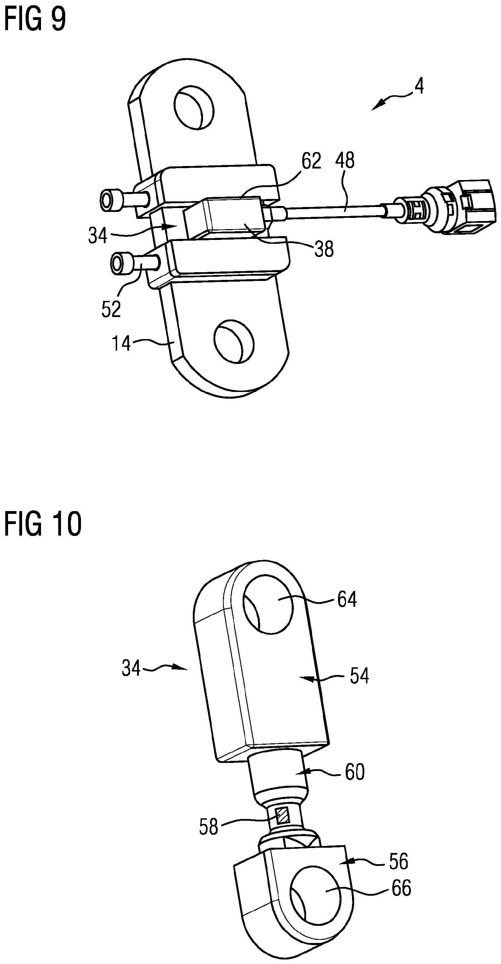

Eine erfindungsgemäße Ausführungsvariante einer Messvorrichtung 4, nach der ein Sensorelement 34 einen Sensorkörper 38 mit Klemmlaschen 50, 50' aufweist, wobei die Klemmlaschen 50, 50' eine Federlasche 14 zwischen sich aufnehmen und der Sensorkörper 38 mittels Klemmens mit der Federlasche 14 verbunden ist, zeigen Fig. 8, 9. Eine der sich in Bezug auf die Federlasche 14 gegenüberliegenden Klemmlaschen 50, 50' nimmt eine Spannschraube 52 zu einem Festspannen des Sensorkörpers 38 an der Federlasche 14 auf. Die Klemmlaschen 50, 50' und die Schraube sind in dem hier gezeigten Ausführungsbeispiel doppelt vorhanden.

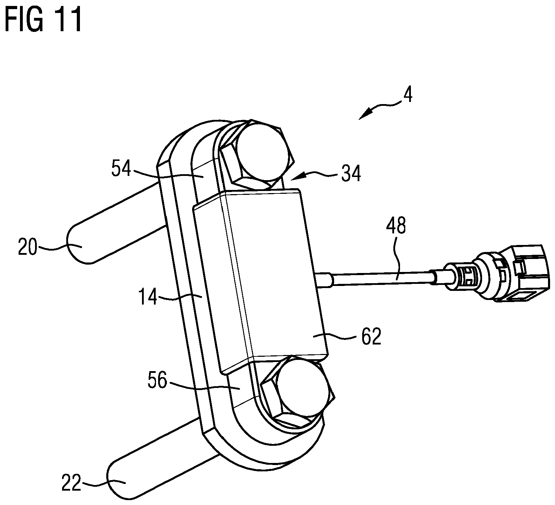

In Fig. 10, 11 ist eine Messvorrichtung 4 dargestellt, die ein Sensorelement 34 aufweist, welches Sensorelement 34 ein erstes Sensorelementteil 54 und ein zweites Sensorelementteil 56 aufweist. Zwischen dem ersten Sensorelementteil 54 und dem zweiten Sensorelementteil 56 ist ein Messelement 58 angeordnet. In dem hier gezeigten Ausführungsbeispiel ist das Messelement 58, das beispielsweise einen Dehnungsmessstreifen aufweisen kann, an dem zweiten Sensorelementteil 56 angeordnet, und zwar im Bereich einer Verjüngung des Sensorelements 34, hier insbesondere des zweiten Sensorelementteils 56. Ferner weist das zweite Sensorelementteil 56 ein Außengewinde 60 auf, welches in ein hier nicht dargestelltes Innengewinde des ersten Sensorelementteils 54 eingeschraubt ist. Das erste Sensorelementteil 54 ist mittels eines ersten Bolzens 20 und das zweite Sensorelementteil 56 mittels eines zweiten Bolzens 22 mit einer Federlasche 14 verbunden. So kann das Sensorelement 34 beispielsweise eine gegebenenfalls bereits existierende Verschraubung an Lagerstellen zwischen Federlasche und Aufbauelement beziehungsweise Federlasche und Blattfeder nutzen. Zum Schutz vor Umgebungseinflüssen ist das Sensorelement 34 mit einem Sensorgehäuse 62 versehen.

Durch die Ausbildung des Sensorelements 34 mit erstem Sensorelementteil 54 und zweitem Sensorelementteil 56 lässt sich das Sensorelement 34 auf verschiedene Längen einstellen und ist entsprechend universell einsetzbar. Vorzugsweise können die Bolzen 20, 22 aufnehmende Befestigungsausnehmungen 64, 66 des ersten Sensorelementteils 54 und des zweiten Sensorelementteils 56 derart dimensioniert sein, dass sie mindestens eine Toleranz aufweisen, die durch Elongation bei einer halben Umdrehung des Gewindes zwischen erstem Sensorelementteil 54 und zweitem Sensorelementteil 56 entsteht. Damit ist das Sensorelement für beliebige Längen einsetzbar. Eine zusätzliche Stabilität des Sensorelements 34 kann durch Verkleben des Gewindes und/oder Verschweißen des Gewindes erreicht werden.

In einem hier nicht dargestellten Ausführungsbeispiel kann eine einfachere Version des Sensorelements auch ohne vorgenanntes Gewinde ausgebildet sein, so dass zum Beispiel lediglich ein Zylinderelement eines ersten Sensorelementteils in eine Ausnehmung, beispielsweise eine Bohrung, zum Beispiel ein sogenanntes Sackloch, eines zweiten Sensorelementteils geschoben wird bis eine gewünschte Länge des Sensorelements erreicht ist; daran anschließend können die beiden Sensorelementteile dann zum Beispiel verschweißt oder verklebt werden.

Eine Ausbildung des Sensorelements mit einem ersten Sensorelementteil und einem zweiten Sensorelementteil in einer der vorstehend beschriebenen Arten ermöglicht eine Realisierung einer Messvorrichtung für eine Vielzahl verschiedenster Federlaschen, da das Sensorelement in seiner Länge variabel ist.

Bei allen vorstehend beschriebenen und dargestellten Ausführungsvarianten kann das jeweilige Sensorelement 34 beispielsweise zumindest einen, gegebenenfalls auf der jeweiligen Federlasche 14 angebrachten, Dehnungsmessstreifen als Messelement aufweisen.

Insgesamt zeigen die Ausführungsbeispiele, wie durch die Erfindung eine Messvorrichtung zu einer fahrzeugeigenen Gewichtsmessung eines eine Blattfeder und ein Aufbauelement aufweisenden Fahrzeugs sowie ein solches Fahrzeug bereitgestellt werden können.

### Bezugszeichenliste

- 1: Anordnung
- 2: Fahrzeugachse
- 4: Messvorrichtung
- 6: Aufbauelement
- 8: Blattfeder
- 10: Federauge
- 12: Federbolzen
- 14, 14': Federlasche
- 16, 16': Laschenende
- 18, 18': Laschenende
- 20: Bolzen
- 22: Bolzen
- 24: Federauge
- 26: Laschenauge
- 28: Laschenauge
- 30: Seitenkante
- 32: Seitenkante
- 34: Sensorelement
- 36: Verjüngung
- 38: Sensorkörper
- 40, 40': Befestigungsflansch
- 42, 42': Klebefuge
- 44, 44': Schweißnaht
- 46, 46', 46", 46‴: Schraube
- 48: Anschlusskabel
- 50, 50': Klemmlasche
- 52: Spannschraube
- 54: Sensorelementteil
- 56: Sensorelementteil
- 58: Messelement
- 60: Außengewinde
- 62: Sensorgehäuse
- 64: Befestigungsausnehmung
- 66: Befestigungsausnehmung

## Patentansprüche

1. Messvorrichtung (4) zu einer fahrzeugeigenen Gewichtsmessung eines Fahrzeugs mit einer ein erstes Laschenende (16) zu einem Verbinden mit einem Aufbauelement (6) des Fahrzeugs und ein zweites Laschenende (18) zu einem Verbinden mit einem Blattfederelement einer Blattfeder (8) des Fahrzeugs aufweisenden Federlasche (14), wobei die Federlasche (14) ein zwischen dem ersten Laschenende (16) und dem zweiten Laschenende (18) angeordnetes Sensorelement (34) zu einer Messung einer Deformation der Federlasche (14) aufweist, **dadurch gekennzeichnet, dass** das Sensorelement (34) einen Sensorkörper (38) mit die Federlasche (14) zwischen sich aufnehmenden Klemmlaschen (50, 50') aufweist und dass der Sensorkörper (38) mittels Klemmens mit der Federlasche (14) verbunden ist.

2. Messvorrichtung nach Anspruch 1, **dadurch gekennzeichnet, dass** das erste Laschenende (16) ein erstes Laschenauge (26) und das zweite Laschenende (18) ein zweites Laschenauge (28) umfasst.

3. Messvorrichtung nach Anspruch 2, **dadurch gekennzeichnet, dass** das erste Laschenauge (26) einen ersten Bolzen (20) zu einem Verbinden der Federlasche (14) mit dem Aufbauelement (6) und das zweite Laschenauge (28) einen zweiten Bolzen (22) zu einem Verbinden der Federlasche (14) mit der Blattfeder (8) aufweist.

4. Messvorrichtung (4) zu einer fahrzeugeigenen Gewichtsmessung eines Fahrzeugs mit einer ein erstes Laschenende (16) zu einem Verbinden mit einem Aufbauelement (6) des Fahrzeugs und ein zweites Laschenende (18) zu einem Verbinden mit einem Blattfederelement einer Blattfeder (8) des Fahrzeugs aufweisenden Federlasche (14), wobei die Federlasche (14) ein zwischen dem ersten Laschenende (16) und dem zweiten Laschenende (18) angeordnetes Sensorelement (34) zu einer Messung einer Deformation der Federlasche (14) aufweist, **dadurch gekennzeichnet, dass** das Sensorelement (34) ein erstes Sensorelementteil (54) und ein zweites Sensorelementteil (56) aufweist, wobei zwischen dem ersten Sensorelementteil (54) und dem zweiten Sensorelementteil (58) ein Messelement (58) angeordnet ist, dass das erste Laschenende (16) ein erstes Laschenauge (26) und das zweite Laschenende (18) ein zweites Laschenauge (28) umfasst, wobei das erste Laschenauge (26) einen ersten Bolzen (20) zu einem Verbinden der Federlasche (14) mit dem Aufbauelement (6) und das zweite Laschenauge (28) einen zweiten Bolzen (22) zu einem Verbinden der Federlasche (14) mit der Blattfeder (8) aufweist, und dass das erste Sensorelementteil (54) mittels des ersten Bolzens (20) und das zweite Sensorelementteil (56) mittels des zweiten Bolzens (22) mit der Federlasche verbunden ist.

5. Messvorrichtung nach einem der vorhergehenden Ansprüche, **dadurch gekennzeichnet, dass** die Federlasche (14) zwischen dem ersten Laschenende (16) und dem zweiten Laschenende (18) eine Verjüngung (36) aufweist und dass das Sensorelement (34) im Bereich der Verjüngung (36) angeordnet ist.

6. Messvorrichtung nach einem der vorhergehenden Ansprüche, **dadurch gekennzeichnet, dass** das Sensorelement (34) einen Sensorkörper (38) mit einem Befestigungsflansch (40) aufweist und dass der Befestigungsflansch (40) form- und/oder kraftschlüssig mit der Federlasche (14) verbunden ist.

7. Messvorrichtung nach Anspruch 6, **dadurch gekennzeichnet, dass** der Befestigungsflansch (40) mittels Klebens oder Schweißens oder Schraubens oder Nietens mit der Federlasche (14) verbunden ist.

8. Messvorrichtung nach einem der vorhergehenden Ansprüche, **dadurch gekennzeichnet, dass** das Sensorelement (34) zumindest einen Dehnungsmessstreifen als Messelement aufweist.

9. Fahrzeug mit einem Aufbauelement (6) und mit einer an einer Fahrzeugachse (2) des Fahrzeugs angeordneten Blattfeder (8), wobei das Aufbauelement (6) und die Blattfeder (8) mittels einer Messvorrichtung (4) nach einem der vorhergehenden Ansprüche verbunden sind.

## Claims

1. Measuring apparatus (4) for in-vehicle weight measurement of a vehicle, comprising a spring lug (14) having a first lug end (16) for connection to a structural element (6) of the vehicle and a second lug end (18) for connection to a leaf spring element of a leaf spring (8) of the vehicle, wherein the spring lug (14) has a sensor element (34), which is arranged between the first lug end (16) and the second lug end (18), for measuring a deformation of the spring lug (14), **characterized in that** the sensor element (34) has a sensor body (38) with clamping lugs (50, 50') which receive the spring lug (14) between them, and **in that** the sensor body (38) is connected to the spring lug (14) by means of clamping.

2. Measuring apparatus according to Claim 1, **characterized in that** the first lug end (16) comprises a first lug eye (26) and the second lug end (18) comprises a second lug eye (28).

3. Measuring apparatus according to Claim 2, **characterized in that** the first lug eye (26) has a first pin (20) for connecting the spring lug (14) to the structural element (6) and the second lug eye (28) has a second pin (22) for connecting the spring lug (14) to the leaf spring (8).

4. Measuring apparatus (4) for in-vehicle weight measurement of a vehicle, comprising a spring lug (14) having a first lug end (16) for connection to a structural element (6) of the vehicle and a second lug end (18) for connection to a leaf spring element of a leaf spring (8) of the vehicle, wherein the spring lug (14) has a sensor element (34), which is arranged between the first lug end (16) and the second lug end (18), for measuring a deformation of the spring lug (14), **characterized in that** the sensor element (34) has a first sensor element part (54) and a second sensor element part (56), wherein a measuring element (58) is arranged between the first sensor element part (54) and the second sensor element part (58), **in that** the first lug end (16) comprises a first lug eye (26) and the second lug end (18) comprises a second lug eye (28), wherein the first lug eye (26) has a first pin (20) for connecting the spring lug (14) to the structural element (6) and the second lug eye (28) has a second pin (22) for connecting the spring lug (14) to the leaf spring (8), and **in that** the first sensor element part (54) is connected to the spring lug by means of the first pin (20) and the second sensor element part (56) is connected to the spring lug by means of the second pin (22).

5. Measuring apparatus according to one of the preceding claims, **characterized in that** the spring lug (14) has a tapered portion (36) between the first lug end (16) and the second lug end (18), and **in that** the sensor element (34) is arranged in the region of the tapered portion (36).

6. Measuring apparatus according to one of the preceding claims, **characterized in that** the sensor element (34) has a sensor body (38) with a fastening flange (40), and **in that** the fastening flange (40) is connected in a positively and/or non-positively locking manner to the spring lug (14).

7. Measuring apparatus according to Claim 6, **characterized in that** the fastening flange (40) is connected to the spring lug (14) by means of adhesive bonding or welding or screwing or riveting.

8. Measuring apparatus according to one of the preceding claims, **characterized in that** the sensor element (34) has at least one strain gauge as the measuring element.

9. Vehicle comprising a structural element (6) and comprising a leaf spring (8) arranged on a vehicle axle (2) of the vehicle, wherein the structural element (6) and the leaf spring (8) are connected by means of a measuring apparatus (4) according to one of the preceding claims.

## Revendications

1. Dispositif de mesure (4) destiné à la mesure de poids embarquée d'un véhicule, comprenant une jumelle de ressort (14) présentant une première extrémité de jumelle (16) servant au raccordement à un élément de structure (6) du véhicule et une deuxième extrémité de jumelle (18) servant au raccordement à un élément de ressort à lames (8) du véhicule, la jumelle de ressort (14) présentant un élément de capteur (34) disposé entre la première extrémité de jumelle (16) et la deuxième extrémité de jumelle (18) et servant à la mesure d'une déformation de la jumelle de ressort (14),
**caractérisé en ce que** l'élément de capteur (34) présente un corps de capteur (38) pourvu d'éclisses de serrage (50, 50') recevant la jumelle de ressort (14) entre celles-ci, et **en ce que** le corps de capteur (38) est raccordé à la jumelle de ressort (14) au moyen d'un serrage avec la jumelle de ressort.

2. Dispositif de mesure selon la revendication 1, **caractérisé en ce que** la première extrémité de jumelle (16) comprend un premier œillet de jumelle (26) et la deuxième extrémité de jumelle (18) comprend un deuxième œillet de jumelle (28).

3. Dispositif de mesure selon la revendication 2, **caractérisé en ce que** le premier œillet de jumelle (26) présente un premier boulon (20) servant au raccordement de la jumelle de ressort (14) à l'élément de structure (6), et le deuxième œillet de jumelle (28) présente un deuxième boulon (22) servant au raccordement de la jumelle de ressort (14) au ressort à lames (8).

4. Dispositif de mesure (4) destiné à la mesure de poids embarquée d'un véhicule, comprenant une jumelle de ressort (14) présentant une première extrémité de jumelle (16) servant au raccordement à un élément de structure (6) du véhicule et une deuxième extrémité de jumelle (18) servant au raccordement à un élément de ressort à lames (8) du véhicule, la jumelle de ressort (14) présentant un élément de capteur (34) disposé entre la première extrémité de jumelle (16) et la deuxième extrémité de jumelle (18) et servant à la mesure d'une déformation de la jumelle de ressort (14),
**caractérisé en ce que** l'élément de capteur (34) présente une première partie d'élément de capteur (54) et une deuxième partie d'élément de capteur (56), un élément de mesure (58) étant disposé entre la première partie d'élément de capteur (54) et la deuxième partie d'élément de capteur (58), **en ce que** la première extrémité de jumelle (16) comprend un premier œillet de jumelle (26) et la deuxième extrémité de jumelle (18) comprend un deuxième œillet de jumelle (28), le premier œillet de jumelle (26) présentant un premier boulon (20) servant au raccordement de la jumelle de ressort (14) à l'élément de structure (6) et le deuxième œillet de jumelle (28) présentant un deuxième boulon (22) servant au raccordement de la jumelle de ressort (14) au ressort à lames (8), et **en ce que** la première partie d'élément de capteur (54) est raccordée à la jumelle de ressort au moyen du premier boulon (20) et la deuxième partie d'élément de capteur (56) est raccordée à la jumelle de ressort au moyen du deuxième boulon (22).

5. Dispositif de mesure selon l'une quelconque des revendications précédentes, **caractérisé en ce que** la jumelle de ressort (14) présente une conicité (36) entre la première extrémité de jumelle (16) et la deuxième extrémité de jumelle (18), et **en ce que** l'élément de capteur (34) est disposé au niveau de la conicité (36).

6. Dispositif de mesure selon l'une quelconque des revendications précédentes, **caractérisé en ce que** l'élément de capteur (34) présente un corps de capteur (38) pourvu d'une bride de fixation (40), et **en ce que** la bride de fixation (40) est raccordée à la jumelle de ressort (14) par complémentarité de forme et/ou par adhérence.

7. Dispositif de mesure selon la revendication 6, **caractérisé en ce que** la bride de fixation (40) est raccordée à la jumelle de ressort (14) au moyen d'un collage ou d'un soudage ou d'un vissage ou d'un rivetage.

8. Dispositif de mesure selon l'une quelconque des revendications précédentes, **caractérisé en ce que** l'élément de capteur (34) présente au moins un extensomètre comme élément de mesure.

9. Véhicule comprenant un élément de structure (6) et un ressort à lames (8) disposé sur un essieu de véhicule (2) du véhicule, l'élément de structure (6) et le ressort à lames (8) étant raccordés au moyen d'un dispositif de mesure (4) selon l'une quelconque des revendications précédentes.
